# EUROPEAN PATENT SPECIFICATION

(11) **EP 3 021 386 B1**
(45) Date of publication and mention of the grant of the patent: **07.08.2019**
(21) Application number: 15821926.1
(22) Date of filing: 18.06.2015
(51) Int. Cl.: H01M 4/485, H01M 4/505, H01M 4/525, H01M 4/131, C01G 53/00, C01G 3/00

(54) **LAYERED OXIDE MATERIAL CONTAINING COPPER, AND PREPARATION METHOD AND USE THEREOF**
GESCHICHTETES OXIDMATERIAL MIT KUPFER SOWIE HERSTELLUNGSVERFAHREN UND VERWENDUNG DAVON
MATÉRIAU OXYDE STRATIFIÉ CONTENANT DU CUIVRE, ET SON PROCÉDÉ DE PRÉPARATION ET SON UTILISATION

(30) Priority: 17.07.2014 CN 201410342541
(43) Date of publication of application: 18.05.2016
(73) Proprietor: Institute Of Physics Chinese Academy Of Sciences, Beijing 100190 (CN)
(72) Inventor: HU, Yongsheng, Beijing 100190 (CN); LI, Yunming, Beijing 100190 (CN); XU, Shuyin, Beijing 100190 (CN); WANG, Yuesheng, Beijing 100190 (CN); CHEN, Liquan, Beijing 100190 (CN); HUANG, Xuejie, Beijing 100190 (CN)
(74) Representative: Glück Kritzenberger Patentanwälte PartGmbB
(86) International application number: PCT/CN2015/081802
(87) International publication number: WO 2016/008350

(56) References cited:
- WO-A1-2014/009722
- CN-A- 103 456 936
- CN-A- 103 531 778
- GB-A- 2 503 896

## Description

### BACKGROUND

### Technical Field

The present invention relates to the field of material technologies, and in particular, to a layered copper-containing oxide material and a preparation process and purpose thereof.

### Related Art

Traditional fossil energies such as coal, petroleum and natural gas provide main energies to human society, but with the gradual exhaustion of the fossil energies and increasing severity of resulting problems such as ecological environment deterioration, various countries are striving to search for renewable and environmentally friendly new energies. Recently, renewable energies such as wind energy and solar energy have been vigorously developed, but characteristics of the renewable energies such as intermittency and instability restrict development thereof. Therefore, a large-scale energy storage system is needed to implement smooth connection of wind power and solar power grids, and be applied to peak load shifting of power grids, thereby reducing costs of power supply, and improving power supply efficiency, stability and reliability of the power grids. Existing secondary batteries mainly include nickel-hydrogen batteries, nickel-cadmium batteries, lead-acid storage batteries, lithium-ion batteries and the like. The lithium-ion batteries are widely applied due to characteristics thereof such as a small volume, low weight and high specific energy, no memory effect, zero pollution, low self-discharge and a long cycle life. However, because lithium resources are limited and extraction costs are high, costs of the lithium-ion batteries are increased, so that requirements of large-scale application for low costs cannot be satisfied. By contrast, sodium that belongs to the same main group as lithium and has physicochemical properties similar to those of lithium is abundant in resources and low in costs. Therefore, development of sodium-ion secondary batteries for use as large-scale energy storage devices attracts people's attention again.

Recently, electrode materials of sodium-ion batteries have been widely researched, and a large quantity of cathodematerials of the sodium-ion batteries were reported, mainly including phosphates, oxides, fluorides, organic compounds and the like. The fluorides are difficult to be applied due to weak dynamic performance thereof, while the organic compounds used as cathodesmay decompose when being charged to a high voltage, so that high voltages cannot be achieved, thereby limiting the energy density thereof. As for cathodematerials of phosphates, although polyanions thereof can help improve the voltage, a relatively large mass leads to a low capacity, thereby restricting practical application thereof. A NASICON structure having high sodium-ion conductivity is a type of phosphate cathode materials that attract great attention, which is typically Na₃V₂(PO₄)₃.Yong-heng Hu *et al.* proposed for the first time that by means of carbon coating thereon and electrolyte optimization, the capacity of this material on a 3.4 V plateau reaches 107 mAh/g, and cycling stability thereof is significantly improved [Electrochem. Commun., 2012, 14, 86-89, Adv. Energy Mater., 2013, 3, 156-160]. Another typical material is Na₃V₂(PO₄)₂F₃ that has the highest average voltage, 3.95 V, and a capacity of 120 mAh/g [J. Mater. Chem.,2012, 22, 20535-20541]. Although Na₃V₂(PO₄)₃ exhibits excellent performance, further development thereof is hindered as vanadium resources are not sufficiently abundant and pentavalent vanadium is toxic.

In addition, cathodematerials of oxides are classified into two types, a layered structure type and a tunnel structure type. Oxides of the tunnel structure mainly include Na_{0.44}MnCO₂ that has a large S-shaped channel. Cao *et al*. researched nanowires of Na_{0.44}MnO₂, and found that the capacity retention rate was 77% after 1,000 cycles at a current density of 0.5C, [Adv. Mater., 2011, 23, 3155-3160], but an initial charge capacity was only half of that, and the other half of the capacity came from a sodium metal anode. However, anodes do not provide sodium in practical application, and therefore this material is difficult to be applied. Layered oxides may be classified into P2-phase and O3-phase according to surrounding environment of sodium ions and accumulation manners of oxygen [Physical B&C, 1980, 99, 81-85]. Due to weak electrochemical cycling performance and being sensitive to air and water, O3-phase oxides are difficult to be applied. P2-phase oxides not only have a relatively large capacity, but also have fine stability during electrochemical cycling as sodium ions are located in relatively large space. However, most of P2-phase materials are not stable in air. In 2001, Lu *et al.* prepared a P2-phase material Na_{2/3}Ni_{1/3}Mri_{2/3}O₂, and performed characterization on electrochemical performance thereof. This material has a capacity of 160 mAh/g under 2.0 V to 4.5 V [Z. H. Lu and J. R. Dahn, J. Electrochem. Soc., 2001, 148, A1225-A1229], but multiple plateaus are presented in an electrochemical curve thereof, and cycling stability is extremely weak.

GB 2 503 896 A discloses nickel doped compounds for use as an electrode material in energy storage devices. A copper containing material of the formula NaNi_{0.45}Mn_{0.40}Cu_{0.05}Ti_{0.05}O₂ is mentioned in this document.

### SUMMARY

Embodiments of the present invention provide a layered copper-containing oxide material and a preparation process and purpose thereof. The layered copper-containing oxide material features a simple preparation process, abundant raw material resources and low costs, which is a pollution-free green material, and can be applied to a positive electrode active material of a sodium-ion secondary battery. A sodium-ion secondary battery that uses the layered copper-containing oxide material of the present invention has relatively high working voltage and initial Coulombic efficiency, stability in air, cycling stability, and fine safety performance, and can be applied to a large-scale energy storage device of a solar power station, a wind power station or a peak load regulation and distribution power station of a smart power grid, or a back-up power source of a communication base station.

According to a first aspect, an embodiment of the present invention provides a layered copper-containing oxide material, with a general chemical formula of Na_{0.68+a}Ni_{b}Cu_{c}M_{d}MnₑO_{2+δ},
where, Ni, Cu and Mn are transition metal elements, and M is an element that performs doping and substitution on transition metal complexation; Ni, Cu, Mn and M respectively form octahedral structures togelher with six oxygen atoms that are most adjacent thereto, and the multiple octahedral structures have arrangements with common edges and constitute transition metal layers; alkali metal ions Na⁺ are located between every two of the transition metal layers; M is specifically one or more of Mg²⁺, Mn²⁺, Zn²⁺, Co²⁺, Al³⁺, B³⁺, Cr³⁺, Mn³⁺, Co³⁺, V³⁺, Zr⁴⁺, Ti⁴⁺, Sn⁴⁺, Mo⁴⁺, Ru⁴⁺, Nb⁴⁺, Sb⁵⁺, Nb⁵⁺, Mo⁶⁺, and Te⁶⁺; a valence of M is m, where m is specifically univalence, bivalence, trivalence, tetravalence, pentavalence or sexavalence; a, b, c, d, e and δ are respectively molar percentages occupied
by corresponding elements; and relationships between a, b, c, d, e, δ, and m meet (0.68+a)+2(b+c)+md+4e=2(2+δ), and also meet b+c+d+e=1, where -0.08≤a≤0.08; 0<b≤0.38; 0<c<0.38; 0≤d<0.36; 0<e≤0.7; and -0.02<δ<0.02.

Preferably, the layered copper-containing oxide material is applied to a positive electrode active material of a sodium-ion secondary battery.

According to a second aspect, an embodiment of the present invention provides a preparation process of the layered copper-containing oxide material as described in the first aspect, where the process is a solid phase method, including:
mixing sodium carbonate whose chemical dosage is 102wt% to 108wt% of that of required sodium with required chemical dosages of nickel oxide, copper oxide, manganese dioxide and an oxide of M in proportion, to obtain a precursor by means of the mixing, where M is specifically one or more of Mg²⁺, Mn²⁺, Zn²⁺, Co²⁺, Al³⁺, B³⁺, Cr³⁺, Mn³⁺, Co³⁺, V³⁺, Zr⁴⁺, Ti⁴⁺, Sn⁴⁺, Mo⁴⁺, Ru⁴⁺, Nb⁴⁺, Sb⁵⁺, Nb⁵⁺, Mo⁶⁺, and Te⁶⁺;
evenly mixing the precursor by using a ball-milling method to obtain precursor powders;
placing the precursor powders into a muffle furnace, and performing heat treatment thereon for 10 h to 24 h in an air atmosphere at 750°C to 1,000°C; and
grinding the precursor powders after the heat treatment, to obtain the layered copper-containing oxide material.

According to a third aspect, an embodiment of the present invention provides a preparation process of the layered copper-containing oxide material as described in the first aspect, where the process is a spray drying method, including:
mixing sodium carbonate whose chemical dosage is 102wt% to 108wt% of that of required sodium with required chemical dosages of nickel oxide, copper oxide, manganese dioxide and an oxide of M in proportion, to obtain a precursor by means of the mixing, where M is specifically one or more of Mg²⁺, Mn²⁺, Zn²⁺, Co²⁺, Al³⁺, B³⁺, Cr³⁺, Mn³⁺, Co³⁺, V³⁺, Zr⁴⁺, Ti⁴⁺, Sn⁴⁺, Mo⁴⁺, Ru⁴⁺, Nb⁴⁺, Sb⁵⁺, Nb⁵⁺, Mo⁶⁺, and Te⁶⁺;
adding ethanol or water into the precursor to form a slurry and evenly stirring;
performing spray drying on the slurry to obtain precursor powders;
placing the precursor powders into a muffle furnace, and performing heat treatment thereon for 10 h to 24 h in an air atmosphere at 750°C to 1.000°C; and
grinding the precursor powders after the heat treatment, to obtain the layered copper-containing oxide material.

According to a fourth aspect, an embodiment of the present invention provides a preparation process of the layered copper-containing oxide material as described in the first aspect, where the process is a sol-gel method, including:
dissolving sodium acetate whose chemical dosage is 102wt% to 108wt% of that of required sodium, and required chemical dosages of a nitrate of a transition metal and a nitrate containing an element M, in a certain volume of deionized water, magnetically stirring at 80°C, gradually adding citric acid thereinto, and drying by evaporation to form a precursor gel, where M is specifically one or more of Mg²⁺, Mn²⁺, Zn²⁺, Co²⁺, Al³⁺, B³⁺, Cr³⁺, Mn³⁺, Co³⁺, V³⁺, Zr⁴⁺, Ti⁴⁺, Sn⁴⁺, Mo⁴⁺, Ru⁴⁺, Nb⁴⁺, Sb⁵⁺, Nb⁵⁺, Mo⁶⁺, and Te⁶⁺;
placing the precursor gel into a crucible, and pre-sintering for 2 h in an air atmosphere at 250°C to 500°C;
further performing heat treatment for 5 h to 24 h at 750°C to 1.000°C; and
grinding the precursor powders after the heat treatment, to obtain the layered copper-containing oxide material.

Preferably, the transition metal includes Ni, Cu and Mn.

According to a fifth aspect, an embodiment of the present invention is directed to the use of a layered copper-containing oxide material prepared by using the process as described above in the second aspect, the third aspect or the fourth aspect, where the layered copper-containing oxide material is applied to a large-scale energy storage device of a solar power station, a wind power station or a peak load regulation and distribution power station
of a smart power grid, or a back-up power source of a communication base station.

According to a sixth aspect, an embodiment of the present invention provides a cathode of a sodium-ion secondary battery, where the cathode includes:
a current collector, a conductive additive and a binder that are coated on the current collector, and the layered copper-containing oxide material as described above in the first aspect.

According to a seventh aspect, an embodiment of the present invention provides a sodium-ion secondary battery including the cathode as described above in the sixth aspect.

According to an eighth aspect, an embodiment of the present invention is directed to the use of the sodium-ion secondary battery as described above in the seventh aspect, where the sodium-ion secondary battery is applied to a large-scale energy storage device of a solar power station, a wind power station or a peak load regulation and distribution power station of a smart power grid, or a back-up power source of a communication base station.

The layered copper-containing oxide material provided in the embodiments of the present invention features a simple preparation process, abundant raw material resources and low costs, which is a pollution-free green material, and can be applied to a positive electrode active material of a sodium-ion secondary battery. A sodium-ion secondary battery that uses the layered copper-containing oxide material of the present invention has relatively high working voltage and initial Coulombic efficiency, cycling stability, and fine safety performance, and can be applied to a large-scale energy storage device of a solar power station, a wind power station or a peak load regulation and distribution power station of a smart power grid, or a back-up power source of a communication base station.

### BRIEF DESCRIPTION OF THE DRAWINGS

The following further describes technical solutions of the embodiments of the present invention in detail with reference to the accompanying drawings and the embodiments.
FIG. 1 is an XRD pattern of multiple layered copper-containing oxide materials with different molecular percentages of elements according to Embodiment 1 of the present invention;
FIG. 2 is a flowchart of a preparation process of a layered copper-containing oxide material according to Embodiment 2 of the present invention;
FIG. 3 is a flowchart of another preparation process of a layered copper-containing oxide material according to Embodiment 3 of the present invention;
FIG. 4 is a flowchart of still another preparation process of a layered copper-containing oxide material according to Embodiment 4 of the present invention;
FIG. 5 is an SEM diagram of Na_{0.68}Ni_{0.23}Cu_{0.11}Mn_{0.66}O₂ according to Embodiment 5 of the present invention;
FIG. 6 is a curve graph of charge and discharge of a sodium-ion battery according to Embodiment 5 of the present invention;
FIG. 7 is a curve graph of charge and discharge of a sodium-ion battery according to Embodiment 6 of the present invention;
FIG. 8 is a curve graph of charge and discharge of a sodium-ion battery according to Embodiment 7 of the present invention;
FIG. 9 is a curve graph of charge and discharge of a sodium-ion battery according to Embodiment 8 of the present invention;
FIG. 10 is a curve graph of charge and discharge of a sodium-ion battery according to Embodiment 9 of the present invention;
FIG. 11 is a curve graph of charge and discharge of a sodium-ion battery according to Embodiment 10 of the present invention;
FIG. 12 is a curve graph of charge and discharge of a sodium-ion battery according to Embodiment 11 of the present invention;
FIG. 13 is a curve graph of charge and discharge of a sodium-ion battery according to Embodiment 12 of the present invention;
FIG. 14 is an SEM diagram of Na_{0.68}Ni_{0.23}Cu_{0.11}Ti_{0.16}Mn_{0.5}O₂ according to Embodiment 13 of the present invention;
FIG. 15 is a curve graph of charge and discharge of a sodium-ion battery according to Embodiment 13 of the present invention; and
FIG. 16 is a curve graph of charge and discharge of a sodium-ion battery according to Embodiment 14 of the present invention.

### DETAILED DESCRIPTION

The following further describes the present invention in detail with reference to the embodiments, but these embodiments are not intended to limit the protection scope of the present invention.

### Embodiment 1

Embodiment 1 of the present invention provides a layered copper-containing oxide material, with a general chemical formula of Na_{0.68+a}Ni_{b}Cu_{c}M_{d}MnₑO_{2+δ},
where, Ni, Cu and Mn are transition metal elements, M is an element that performs doping and substitution on transition metal complexation, and M is specifically one or more of Mg²⁺, Mn²⁺, Zn²⁺, Co²⁺, Al³⁺, B³⁺, Cr³⁺, Mn³⁺, Co³⁺, V³⁺, Zr⁴⁺, Ti⁴⁺, Sn⁴⁺, Mo⁴⁺, Ru⁴⁺, Nb⁴⁺, Sb⁵⁺, Nb⁵⁺, Mo⁶⁺, and Te⁶⁺; and a valence of M is m, where m is specifically univalence, bivalence, trivalence, tetravalence, pentavalence or sexavalence; and
a, b, c, d, e and δ are respectively molar percentages occupied by corresponding elements; and relationships between a, b, c, d, e, δ, and m meet (0.68+a)+2(b+c)+md+4e=2(2+δ), and also meet b+c+d+e=1, where -0.08≤a≤0.08; 0<b≤0.38; 0<c<0.38; 0≤d<0.36; 0<e≤0.7; and -0.02<δ<0.02.

In the structure of Na_{0.68+a}Ni_{b}Cu_{c}M_{d}MnₑO_{2+δ}, Ni, Cu, M and Mn respectively form octahedral structures together with six oxygen atoms that are most adjacent thereto. The multiple octahedral structures have arrangements with common edges and constitute transition metal layers. Alkali metal ions Na⁺ are located between every two of the transition metal layers, thereby forming a layered structure.

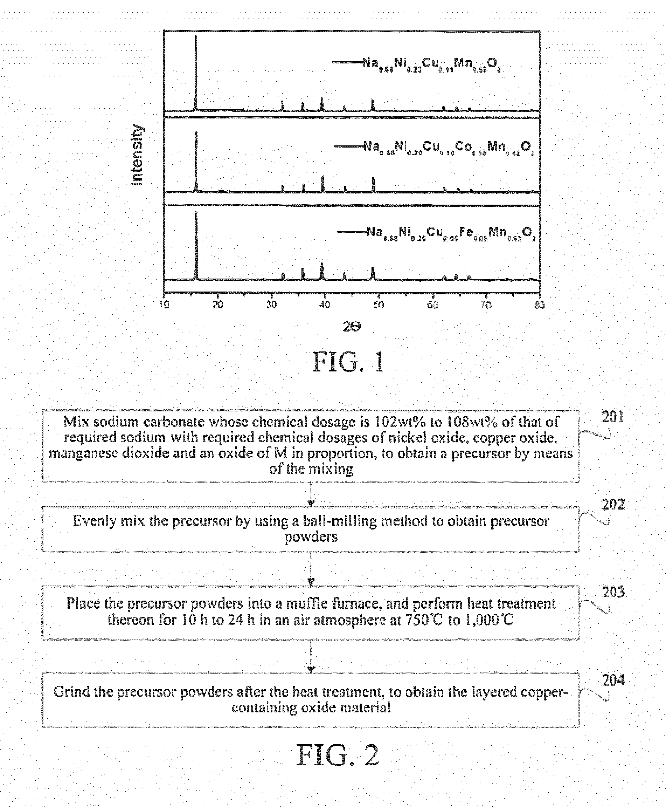

FIG. 1 shows an X-ray diffraction (XRD) pattern of multiple layered copper-containing oxide materials with different molecular percentages of elements, from which it can be seen that a crystal structure of the Na_{0.68+a}Ni_{b}Cu_{c}M_{d}MnₑO_{2+δ} provided in this embodiment is a P2-phase oxide of a layered structure.

The layered copper-containing oxide material provided in this embodiment features a simple preparation process, abundant raw material resources and low costs, which is a pollution-free green material, and can be applied to a positive electrode active material of a sodium-ion secondary battery. A sodium-ion secondary battery that uses the layered copper-containing oxide material of the present invention has relatively high working voltage and initialCoulombicefficiency, stability in air, cycling stability and fine safety performance.

### Embodiment 2

This embodiment provides a preparation process of a layered copper-containing oxide material, which is specifically a solid phase method. As shown in FIG. 2, the process includes:
Step 201: Mix sodium carbonate whose chemical dosage is 102wt% to 108wt% of that of required sodium with required chemical dosages of nickel oxide, copper oxide, manganese dioxide and an oxide of M in proportion, to obtain a precursor by means of the mixing.

Specifically, M may be one or more of Mg²⁺, Mn²⁺, Zn²⁺, Co²⁺, Al³⁺, B³⁺, Cr³⁺, Mn³⁺, Co³⁺, V³⁺, Zr⁴⁺, Ti⁴⁺, Sn⁴⁺, Mo⁴⁺, Ru⁴⁺, Nb⁴⁺, Sb⁵⁺, Nb⁵⁺, Mo⁶⁺, and Te⁶⁺.

Step 202: Evenly mix the precursor by using a ball-milling method to obtain precursor powders.

Step 203: Place the precursor powders into a muffle furnace, and perform heat treatment thereon for 10 h to 24 h in an air atmosphere at 750°C to 1,000°C.

Step 204: Grind the precursor powders after the heat treatment, to obtain the layered copper-containing oxide material.

The preparation process of a layered copper-containing oxide material provided in this embodiment can be used to prepare the layered copper-containing oxide material as described above in Embodiment 1. The process provided in this embodiment is simply and easily implemented, low in costs and applicable for large-scale manufacturing.

### Embodiment 3

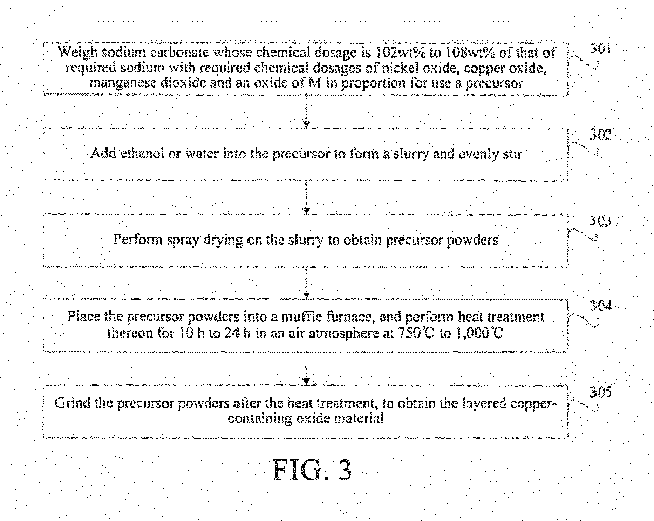

This embodiment provides a preparation process of a layered copper-containing oxide material, which is specifically a spray drying method. As shown in FIG. 3, the process includes:
Step 301: Weigh sodium carbonate whose chemical dosage is 102wt% to 108wt% of that of required sodium with required chemical dosages of nickel oxide, copper oxide, manganese dioxide and an oxide of M in proportion for use a precursor.

Specifically, M may be one or more of Mg²⁺, Mn²⁺, Zn²⁺, Co²⁺, Al³⁺, B³⁺, Cr³⁺, Mn³⁺, Co³⁺, V³⁺, Zr⁴⁺, Ti⁴⁺, Sn⁴⁺, Mo⁴⁺, Ru⁴⁺, Nb⁴⁺, Sb⁵⁺, Nb⁵⁺, Mo⁶⁺, and Te⁶⁺.

Step 302: Add ethanol or water into the precursor and evenly stir to form a slurry.

Step 303: Perform spray drying on the slurry to obtain precursor powders.

Step 304: Place the precursor powders into a muffle furnace, and perform heat treatment thereon for 10 h to 24 h in an air atmosphere at 750°C to 1,000°C.

Step 305: Grind the precursor powders after the heat treatment, to obtain the layered copper-containing oxide material.

The preparation process of a layered copper-containing oxide material provided in this embodiment can be used to prepare the layered copper-containing oxide material as described above in Embodiment 1. The process provided in this embodiment is simply and easily implemented, low in costs and applicable for large-scale manufacturing.

### Embodiment 4

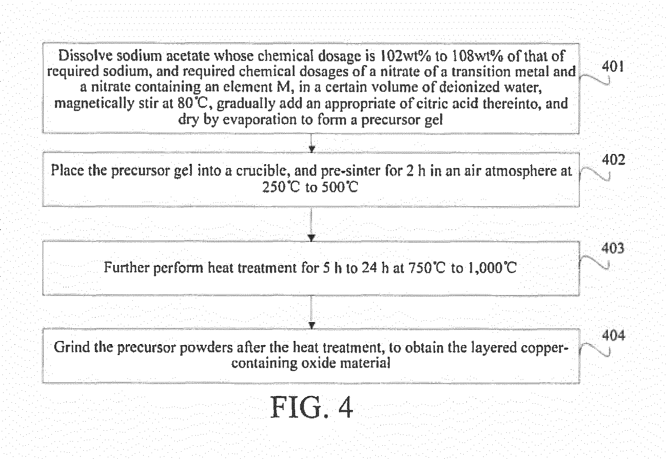

This embodiment provides a preparation process of a layered copper-containing oxide material, which is specifically a sol-gel method. As shown in FIG. 4, the process includes:
Step 401: Dissolve sodium acetate whose chemical dosage is 102wt% to 108wt% of that of required sodium, and required chemical dosages of a nitrate of a transition metal and a nitrate containing an element M, in a certain volume of deionized water, magnetically stir at 80°C, gradually add an appropriate of citric acid thereinto, and dry by evaporation to form a precursor gel.

The transition metal may include Ni, Cu and Mn. M is an element that performs doping and substitution on transition metal complexation, and is specifically one or more of Mg²⁺, Mn²⁺, Zn²⁺, Co²⁺, Al³⁺, B³⁺, Cr³⁺, Mn³⁺, Co³⁺, V³⁺, Zr⁴⁺, Ti⁴⁺, Sn⁴⁺, Mo⁴⁺, Ru⁴⁺, Nb⁴⁺, Sb⁵⁺, Nb⁵⁺, Mo⁶⁺, and Te⁶⁺.

Step 402: Place the precursor gel into a crucible, and pre-sinter for 2 h in an air atmosphere at 250°C to 500°C.

Step 403: Further perform heat treatment for 5 h to 24 h at 750°C to 1,000°C.

Step 404: Grind the precursor powders after the heat treatment, to obtain the layered copper-containing oxide material.

The preparation process of a layered copper-containing oxide material provided in this embodiment can be used to prepare the layered copper-containing oxide material as described above in Embodiment 1. The process provided in this embodiment is simply and easily implemented, low in costs and applicable for large-scale manufacturing.

The following describes, by using multiple specific examples, a specific procedure of preparing a layered copper-containing oxide material by using the process provided in Embodiment 2 of the present invention, as well as a method for applying this material to a secondary battery and characteristics of the battery.

### Embodiment 5

In this embodiment, a layered copper-containing oxide material prepared by using the solid phase method as described above in Embodiment 2 was used.

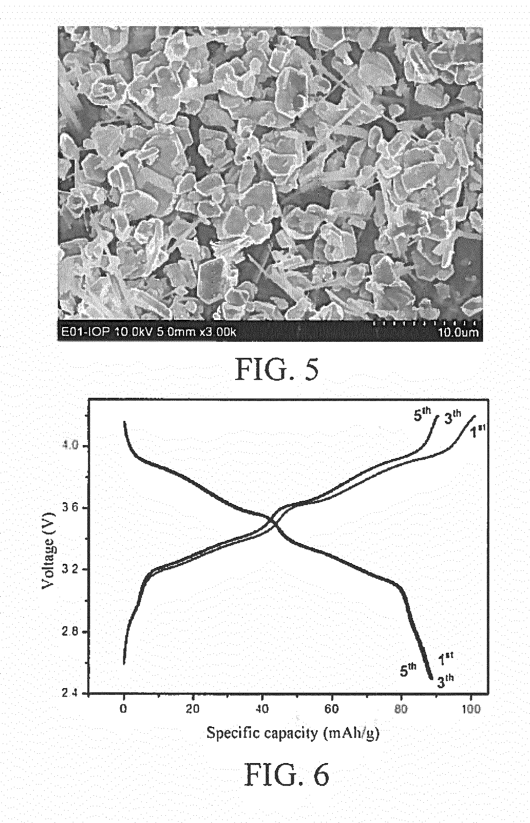

Na₂CO₃ (analytically pure), NiO (analytically pure), CuO and MnO₂ were mixed according to required chemical dosages, and grinded in an agate mortar for 0.5 h, to obtain a precursor; then the precursor substance was transferred into a Al₂O₃ crucible, and processed for 15 h in a muffle furnace at 900°C, to obtain dark powders of a layered copper-containing oxide material Na_{0.68}Ni_{0.23}Co_{0.11}Mn_{0.66}O₂. FIG. 1 shows an XRD pattern thereof, from which it can be seen that, a crystal structure of the Na_{0.68}Ni_{0.23}Cu_{0.11}Mn_{0.66}O₂ is a P2-phase oxide of a layered structure. FIG. 5 is a scanning electron microscope (SEM) graph of the Na_{0.68}Ni_{0.23}Cu_{0.11}Mn_{0.66}O₂, from which it can be seen that, particle size distribution of the Na_{0.68}Ni_{0.23}Cu_{0.11}Mn_{0.66}O₂ mostly ranges from I µm to 5 µm, accompanied by some rod-like particles.

The foregoing prepared layered copper-containing oxide material was used as an active material of a battery cathode material and applied to manufacturing of a sodium-ion battery. Specific steps were: powders of the prepared Na_{0.68}Ni_{0.23}Cu_{0.11}Mn_{0.66}O₂ were mixed together with acetylene black and a binder, polyvinylidene fluoride (PVDF) according to a mass ratio of 80:10:10, and an appropriate amount of 1-methyl-2-pyrrolidinone (NMP) solution was added thereinto. A resulting mixture was grinded at room temperature under a dry environment to form a slurry. Then the slurry was evenly coated on a current collector of copper foil, dried under an infrared lamp, and then cut into (8x8) mm² pole pieces. The pole pieces were dried for 10 h at 100°C under a vacuum condition, and then transferred to a glove box for ready to use.

Assembling of a simulated battery was performed in a glove box in an argon gas (Ar) atmosphere. Sodium metal was used as counter electrodes and a solution of NaClO₄/diethyl carbonate (EC:DEC) was used as an electrolyte, to assemble into a CR2032 button battery. A charging and discharging test was performed at a current density of C/10 by using a constant-current charge/discharge mode. Under a condition that a discharge cut-off voltage was 2.5 V and a charge cut-off voltage was 4.2 V, results of the test are shown in FIG. 6. FIG. 6 shows curves of charge and discharge cycles of the first cycle, the third cycle and the fifth cycle, from which it can be seen that an initial specific discharge capacity could reach 88.5 mAh/g, initialCoulombicefficiency was about 87.6%, and cycling was very stable.

### Embodiment 6

In this embodiment, a layered copper-containing oxide material prepared by using the solid phase method as described above in Embodiment 2 was used.

A specific preparation procedure in this embodiment was the same as that in Embodiment 5, except that chemical dosages of the precursor compounds used, Na₃CO₃ (analytically pure), NiO (analytically pure), CuO and MnO₂ were different from those in Embodiment 5, and black powders of a layered copper-containing oxide material Na_{0.68}Ni_{0.28}Cu_{0.06}Mn_{0.66}O₂ were obtained.

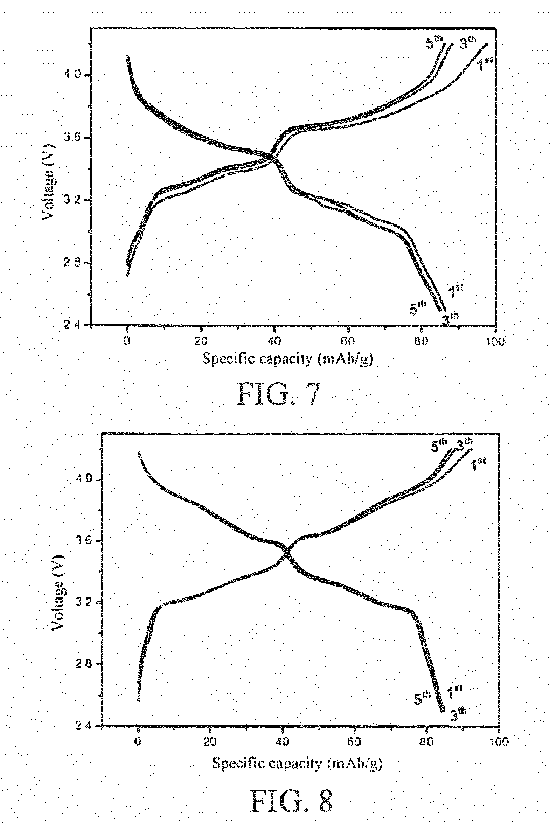

The foregoing prepared layered copper-containing oxide material was used as an active material of a battery cathode material and applied to manufacturing of a sodium-ion battery, and an electrochemical charging and discharging test was preformed. A manufacturing process and a test method thereof were the same as those in Embodiment 5. A test voltage range was from 2.5 V to 4.2 V, and results of the test are shown in FIG. 7. FIG. 7 shows curves of charge and discharge of the first cycle, the third cycle and the fifth cycle. It can be seen that, an initial specific discharge capacity could reach 86.4 mAh/g, initial Coulombic efficiency was about 88.4%, and it has excellent cycling stability.

### Embodiment 7

In this embodiment, a layered copper-containing oxide material prepared by using the solid phase method as described above in Embodiment 2 was used.

A specific preparation procedure in this embodiment was the same as that in Embodiment 5, except that chemical dosages of the precursor compounds used, Na₂CO₃ (analytically pure), NiO (analytically pure), CuO, MnO₂ and MgO were different from those in Embodiment 5, and black powders of a layered copper-containing oxide material Na_{0.68}Ni_{0.22}Cu_{0.06}Mg_{0.06}Mn_{0.66}O₂ were obtained.

The foregoing prepared layered copper-containing oxide material was used as an active material of a battery cathode material and applied to manufacturing of a sodium-ion battery, and an electrochemical charging and discharging test was preformed. A manufacturing process and a test method thereof were the same as those in Embodiment 5. A test voltage range was from 2.5 V to 4.2 V, and results of the test are shown in FIG. 8. FIG. 8 shows curves of charge and discharge of the first cycle, the third cycle and the fifth cycle. It can be seen that, an initial specific discharge capacity could reach 84.3 mAh/g, initial Coulombic efficiency was about 91.3%, and it has excellent cycling stability.

### Embodiment 8

In this embodiment, a layered copper-containing oxide material prepared by using the solid phase method as described above in Embodiment 2 was used.

A specific preparation procedure in this embodiment was the same as that in Embodiment 5, except that chemical dosages of the precursor compounds used, Na₂CO₃ (analytically pure), NiO (analytically pure), CuO, MnO₂ and ZnO were different from those in Embodiment 5, and black powders of a layered copper-containing oxide material Na_{0.68}Ni_{0.22}Cu_{0.08}Zn_{0.04}Mn_{0.66}O₂ were obtained.

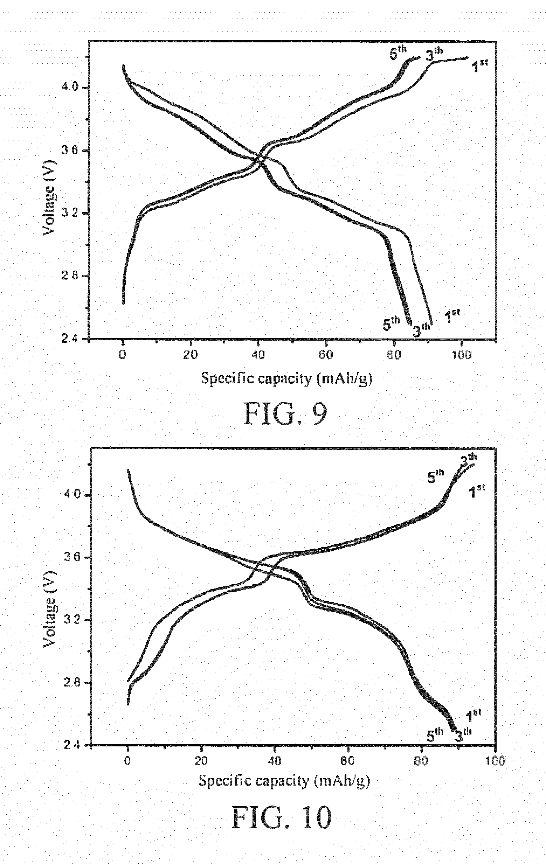

The foregoing prepared layered copper-containing oxide material was used as an active material of a battery cathode material and applied to manufacturing of a sodium-ion battery, and an electrochemical charging and discharging test was preformed. A manufacturing process and a test method thereof were the same as those in Embodiment 5. A test voltage range was from 2.5 V to 4.2 V, and results of the test are shown in FIG. 9. FIG. 9 shows curves of charge and discharge of the first cycle, the third cycle and the fifth cycle. It can be seen that an initial specific discharge capacity could reach 91.2 mAh/g, and initial Coulombic efficiency was about 89.6%.

### Embodiment 9

In this embodiment, a layered copper-containing oxide material prepared by using the solid phase method as described above in Embodiment 2 was used.

A specific preparation procedure in this embodiment was the same as that in Embodiment 5, except that chemical dosages of the precursor compounds used, Na₂CO₃ (analytically pure), NiO (analytically pure), CuO, MnO₂ and B₂O₃ were different from those in Embodiment 5, and black powders of a layered copper-containing oxide material Na_{0.68}Ni_{0.21}Cu_{0.10}B_{0.06}Mn_{0.63}O₂ were obtained.

The foregoing prepared layered copper-containing oxide material was used as an active material of a battery cathode material and applied to manufacturing of a sodium-ion battery, and an electrochemical charging and discharging test was preformed. A manufacturing process and a test method thereof were the same as those in Embodiment 5. A test voltage range was from 2.5 V to 4.2 V, and results of the test are shown in FIG. 10. FIG. 10 shows curves of charge and discharge of the first cycle, the third cycle and the fifth cycle. It can be seen that, an initial specific discharge capacity could reach 88.3 mAh/g, initial Coulombic efficiency was about 93.6%, and it has excellent cycling stability.

### Embodiment 10

In this embodiment, a layered copper-containing oxide material prepared by using the solid phase method as described above in Embodiment 2 was used.

A specific preparation procedure in this embodiment was the same as that in Embodiment 5, except that chemical dosages of the precursor compounds used, Na₃CO₃ (analytically pure), NiO (analytically pure), CuO, MnO₂ and Al₂O₃ were different from those in Embodiment 5, and black powders of a layered copper-containing oxide material Na_{0.68}Ni_{0.24}Cu_{0.08}Al_{0.04}Mn_{0.64}O₂ were obtained.

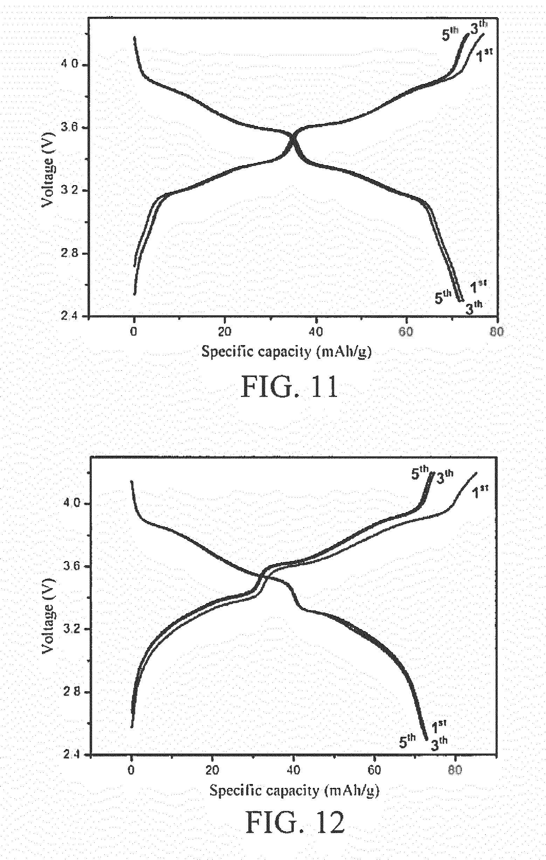

The foregoing prepared layered copper-containing oxide material was used as an active material of a battery cathode material and applied to manufacturing of a sodium-ion battery, and an electrochemical charging and discharging test was preformed. A manufacturing process and a test method thereof were the same as those in Embodiment 5. A test voltage range was from 2.5 V to 4.2 V, and results of the test are shown in FIG. 11. FIG. 11 shows curves of charge and discharge of the first cycle, the third cycle and the fifth cycle. It can be seen that, an initial specific discharge capacity could reach 71.5 mAh/g, initial Coulombic efficiency was about 92.8%, and it has excellent cycling stability.

### Embodiment 11

In this embodiment, a layered copper-containing oxide material prepared by using the solid phase method as described above in Embodiment 2 was used.

A specific preparation procedure in this embodiment was the same as that in Embodiment 5, except that chemical dosages of the precursor compounds used, Na₂CO₃ (analytically pure), NiO (analytically pure), CuO, MnO₂ and Co₂O₃ were different from those in Embodiment 5, and black powders of a layered copper-containing oxide material Na_{0.68}Ni_{0.20}Cu_{0.10}Co_{0.08}Mn_{0.62}O₂ were obtained. An XRD pattern thereof is shown in FIG. 1.

The foregoing prepared layered copper-containing oxide material was used as an active material of a battery cathode material and applied to manufacturing of a sodium-ion battery, and an electrochemical charging and discharging test was preformed. A manufacturing process and a test method thereof were the same as those in Embodiment 5. A test voltage range was from 2.5 V to 4.2 V, and results of the test are shown in FIG. 12. FIG. 12 shows curves of charge and discharge of the first cycle, the third cycle and the fifth cycle. It can be seen that, an initial specific discharge capacity could reach 73 mAh/g, initial Coulombic efficiency was about 85.7%, and it has excellent cycling stability.

### Embodiment 12

In this embodiment, a layered copper-containing oxide material prepared by using the solid phase method as described above in Embodiment 2 was used.

A specific preparation procedure in this embodiment was the same as that in Embodiment 5, except that chemical dosages of the precursor compounds used, Na₂CO₃ (analytically pure), NiO (analytically pure), CuO, MnO₂ and Fe₂O₃ were different from those in Embodiment 5, and black powders of a layered copper-containing oxide material Na_{0.68}Ni_{0.25}Cu_{0.06}Fe_{0.06}Mn_{0.63}O₂ were obtained. An XRD pattern thereof is shown in FIG. 1.

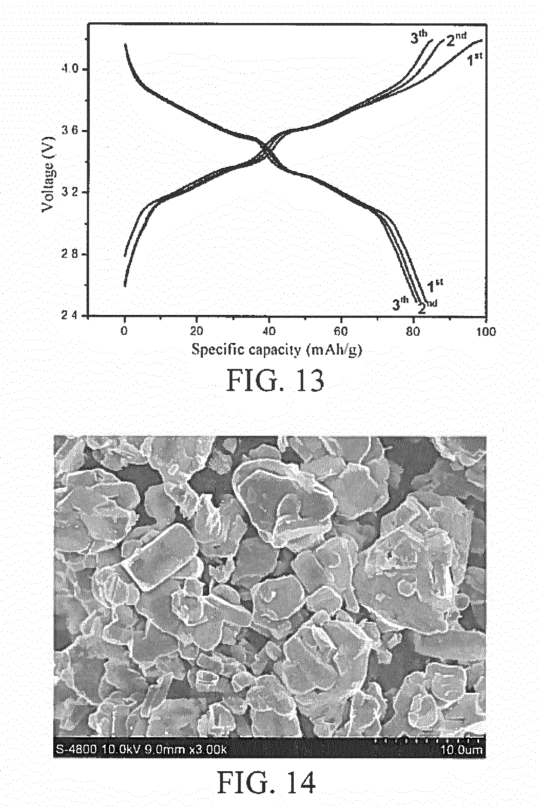

The foregoing prepared layered copper-containing oxide material was used as an active material of a battery cathode material and applied to manufacturing of a sodium-ion battery, and an electrochemical charging and discharging test was preformed. A manufacturing process and a test method thereof were the same as those in Embodiment 5. A test voltage range was from 2.5 V to 4.2 V, and results of the test are shown in FIG. 13. FIG. 13 shows curves of charge and discharge of the first cycle, the second cycle and the third cycle. It can be seen that, an initial specific discharge capacity could reach 83.5 mAh/g, initial Coulombic efficiency was about 84.6%, and it has excellent cycling stability.

### Embodiment 13

In this embodiment, a layered copper-containing oxide material prepared by using the solid phase method as described above in Embodiment 2 was used.

A specific preparation procedure in this embodiment was the same as that in Embodiment 5, except that chemical dosages of the precursor compounds used, Na₂CO₃ (analytically pure), NiO (analytically pure), CuO, MnO₂ and TiO₂ were different from those in Embodiment 5, and black powders of a layered copper-containing oxide material Na_{0.68}Ni_{0.23}Cu_{0.11}Ti_{0.16}Mn_{0.50}O₂ were obtained.

FIG. 14 is a scanning electron microscope (SEM) graph of the Na_{0.68}Ni_{0.23}Cu_{0.11}Ti_{0.16}Mn_{0.50}O₂, from which it can be seen that particle size distribution of the Na_{0.68}Ni_{0.23}Cu_{0.11}Ti_{0.16}Mn_{0.50}O₂ mostly ranges from less than 10 µm to 10 to 20 µm.

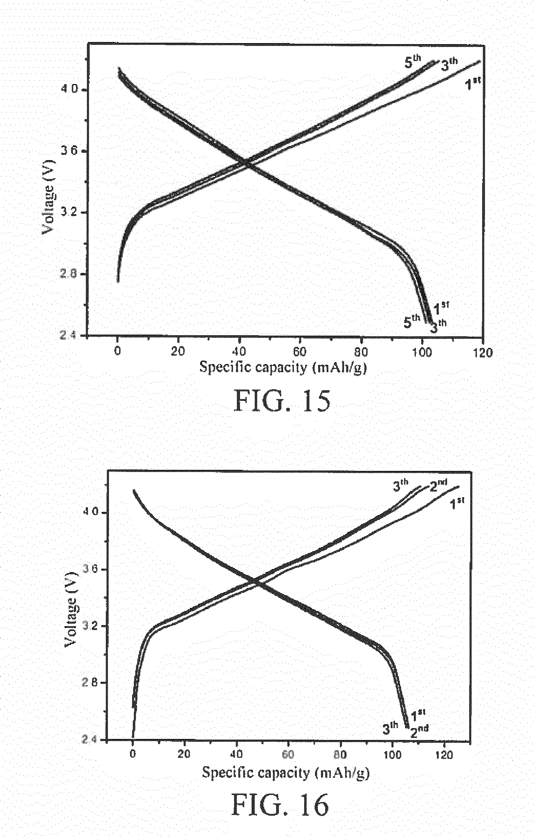

The foregoing prepared layered copper-containing oxide material was used as an active material of a battery cathode material and applied to manufacturing of a sodium-ion battery, and an electrochemical charging and discharging test was preformed. A manufacturing process and a test method thereof were the same as those in Embodiment 5. A test voltage range was from 2.5 V to 4.2 V, and results of the test are shown in FIG. 15. FIG. 15 shows curves of charge and discharge of the first cycle, the third cycle and the fifth cycle. It can be seen that, an initial specific discharge capacity could reach 103.2 mAh/g, initial Coulombic efficiency was about 87%, and it has excellent cycling stability.

### Embodiment 14

In this embodiment, a layered copper-containing oxide material prepared by using the solid phase method as described above in Embodiment 2 was used.

A specific preparation procedure in this embodiment was the same as that in Embodiment 5, except that chemical dosage ratios of the precursor compounds used, Na₂CO₃ (analytically pure), NiO (analytically pure), CuO, MnO₂ and TiO₂ were different from those in Embodiment 5, and black powders of a layered copper-containing oxide material Na_{0.68}Ni_{0.28}Cu_{0.06}Ti_{0.16}Mn_{0.50}O₂ were obtained.

The foregoing prepared layered copper-containing oxide material was used as an active material of a battery cathode material and applied to manufacturing of a sodium-ion battery, and an electrochemical charging and discharging test was preformed. A manufacturing process and a test method thereof were the same as those in Embodiment 5. A test voltage range was from 2.5 V to 4.2 V, and results of the test are shown in FIG. 16. FIG. 16 shows curves of charge and discharge of the first cycle, the second cycle and the third cycle. It can be seen that an initial specific discharge capacity could reach 106.2 mAh/g, and initial Coulombic efficiency was about 84.9%.

### Embodiment 15

In this embodiment, a layered copper-containing oxide material prepared by using the solid phase method as described above in Embodiment 2 was used.

A specific preparation procedure in this embodiment was the same as that in Embodiment 5, except that chemical dosage ratios of the precursor compounds used, Na₂CO₃ (analytically pure), NiO (analytically pure), CuO, MnO₂ and Mn₂O₃ were different from those in Embodiment 5, and black powders of a layered copper-containing oxide material Na_{0.68}Ni_{0.23}Cu_{0.08}Mn_{0.69}O₂ were obtained.

The foregoing prepared layered copper-containing oxide material was used as an active material of a battery cathode material and applied to manufacturing of a sodium-ion battery, and an electrochemical charging and discharging test was preformed. A manufacturing process and a test method thereof were the same as those in Embodiment 5. A test voltage range was from 2.5 V to 4.2 V, and results of the test are shown in Table 1 below.

### Embodiment 16

In this embodiment, a layered copper-containing oxide material prepared by using the solid phase method as described above in Embodiment 2 was used.

A specific preparation procedure in this embodiment was the same as that in Embodiment 5, except that chemical dosage ratios of the precursor compounds used, Na₂CO₃ (analytically pure), NiO (analytically pure), CuO, MnO₂ and V₂O₃ were different from those in Embodiment 5, and black powders of a layered copper-containing oxide material Na_{0.68}Ni_{0.22}Cu_{0.08}V_{0.08}Mn_{0.62}O₂ were obtained.

The foregoing prepared layered copper-containing oxide material was used as an active material of a battery cathode material and applied to manufacturing of a sodium-ion battery, and an electrochemical charging and discharging test was preformed. A manufacturing process and a test method thereof were the same as those in Embodiment 5. A test voltage range was from 2.5 V to 4.2 V, and results of the test are shown in Table 1 below.

### Embodiment 17

In this embodiment, a layered copper-containing oxide material prepared by using the solid phase method as described above in Embodiment 2 was used.

A specific preparation procedure in this embodiment was the same as that in Embodiment 5, except that chemical dosage ratios of the precursor compounds used, Na₃CO₃ (analytically pure), NiO (analytically pure), CuO, MnO₂ and SnO₂ were different from those in Embodiment 5, and black powders of a layered copper-containing oxide material Na_{0.68}Ni_{0.24}Cu_{0.10}Mn_{0.54}Sn_{0.12}O₂ were obtained.

The foregoing prepared layered copper-containing oxide material was used as an active material of a battery cathode material and applied to manufacturing of a sodium-ion battery, and an electrochemical charging and discharging test was preformed. A manufacturing process and a test method thereof were the same as those in Embodiment 5. A test voltage range was from 2.5 V to 4.2 V, and results of the test are shown in Table 1 below.

### Embodiment 18

In this embodiment, a layered copper-containing oxide material prepared by using the solid phase method as described above in Embodiment 2 was used.

A specific preparation procedure in this embodiment was the same as that in Embodiment 5, except that chemical dosage ratios of the precursor compounds used, Na₃CO₃ (analytically pure), NiO (analytically pure), CuO, MnO₂ and Nb₂O₅ were different from those in Embodiment 5, and black powders of a layered copper-containing oxide material Na_{0.68}Ni_{0.26}Cu_{0.10}Mn_{0.60}Nb_{0.04}O₂ were obtained.

The foregoing prepared layered copper-containing oxide material was used as an active material of a battery cathode material and applied to manufacturing of a sodium-ion battery, and an electrochemical charging and discharging test was preformed. A manufacturing process and a test method thereof were the same as those in Embodiment 5. A test voltage range was from 2.5 V to 4.2 V, and results of the test are shown in Table 1 below.

### Embodiment 19

In this embodiment, a layered copper-containing oxide material prepared by using the solid phase method as described above in Embodiment 2 was used.

A specific preparation procedure in this embodiment was the same as that in Embodiment 5, except that chemical dosage ratios of the precursor compounds used, Na₂CO₃ (analytically pure), NiO (analytically pure), CuO, and MnO₂ were different from those in Embodiment 5, and black powders of a layered copper-containing oxide material Na_{0.72}Ni_{0.24}Cu_{0.12}Mn_{0.64}O₂ were obtained.

The foregoing prepared layered copper-containing oxide material was used as an active material of a battery cathode material and applied to manufacturing of a sodium-ion battery, and an electrochemical charging and discharging test was preformed. A manufacturing process and a test method thereof were the same as those in Embodiment 5. A test voltage range was from 2.5 V to 4.2 V, and results of the test are shown in Table 1 below.

### Embodiment 20

In this embodiment, a layered copper-containing oxide material prepared by using the solid phase method as described above in Embodiment 2 was used.

A specific preparation procedure in this embodiment was the same as that in Embodiment 5, except that chemical dosage ratios of the precursor compounds used, Na₂CO₃ (analytically pure), NiO (analytically pure), CuO, MnO₂ and MgO were different from those in Embodiment 5, and black powders of a layered copper-containing oxide material Na_{0.70}Ni_{0.22}Cu_{0.08}Mg_{0.05}Mn_{0.65}O₂ were obtained.

The foregoing prepared layered copper-containing oxide material was used as an active material of a battery cathode material and applied to manufacturing of a sodium-ion battery, and an electrochemical charging and discharging test was preformed. A manufacturing process and a test method thereof were the same as those in Embodiment 5. A test voltage range was from 2.5 V to 4.2 V, and results of the test are shown in Table 1 below.

**Table 1**

| Embodiment | Electrode active material | First-cyclespecific charge capacity (mAh/g) | First-cyclespecific discharge capacity (mAh/g) |
|---|---|---|---|
| 15 | Na_{0. 68}Ni_{0. 23}Cu_{0.08}Mn_{0.69}O₂ | 112 | 88 |
| 16 | Na_{0.68}Ni_{0.22}Cu_{0.08}V_{0.08}Mn_{0.62}O₂ | 103 | 84 |
| 17 | Na_{0.68}Ni_{0.24}Cu_{0.10}Mn_{0.54}Sn_{0.12}O₂ | 110 | 87 |
| 18 | Na_{0.68}Ni_{0.26}Cu_{0. 10}Mn_{0.60}Nb_{0.04}O₂ | 105 | 81 |
| 19 | Na_{0.72}Ni_{0.24}Cu_{0.12}Mn_{0.64}O₂ | 118 | 94 |
| 20 | Na_{0.70}Ni_{0. 22}Cu_{0.08}Mg_{0.05}Mn_{0.65}O₂ | 114 | 91 |

The foregoing Embodiment 5 to Embodiment 20 describe the specific procedure of preparing a layered copper-containing oxide material by using the process provided in Embodiment 2 of the present invention, as well as methods for applying this material to a secondary battery and characteristics of the battery, but a material preparation process used in the foregoing Embodiment 5 to Embodiment 20 is not limited to the solid phase method provided in Embodiment 2 of the present invention. A person skilled in the art can easily recognize that the layered copper-containing oxide material of the foregoing Embodiment 5 to Embodiment 20 may also be prepared by using the spray drying method provided in Embodiment 3 of the present invention or the sol-gel method provided in Embodiment 4.

The layered copper-containing oxide material provided in the foregoing embodiments of the present invention features a simple preparation process, abundant raw material resources and low costs, which is a pollution-free green material, and can be used as a positive electrode active material of a sodium-ion secondary battery and applied to a sodium-ion secondary battery. A sodium-ion secondary battery manufactured in such a manner has relatively high working voltage and initial Coulombic efficiency, stability in air, cycling stability, and fine safety performance, and can be applied to a large-scale energy storage device of a solar power station, a wind power station or a peak load regulation and distribution power station of a smart power grid, or a back-up power source of a communication base station.

The foregoing specific implementation manners further describe the objective, technical solutions and advantageous effects of the present invention in detail. It should be understood that the foregoing description merely shows specific implementation manners of the present invention.

## Claims

1. A layered copper-containing oxide material, wherein the layered copper-containing oxide material has a general chemical formula of Na_{0.68+a}Ni_{b}Cu_{c}M_{d}MnₑO_{2+δ},
wherein, Ni, Cu and Mn are transition metal elements, and M is an element that performs doping and substitution on transition metal complexation; Ni, Cu, Mn and M respectively form octahedral structures together with six oxygen atoms that are most adjacent thereto, and the multiple octahedral structures have arrangements with common edges and constitute transition metal layers; alkali metal ions Na⁺ are located between every two of the transition metal layers; M is specifically one or more of Mg²⁺, Mn²⁺, Zn²⁺, Co²⁺, Al³⁺, B³⁺, Cr³⁺, Mn³⁺, Co³⁺, V³⁺, Zr⁴⁺, Ti⁴⁺, Sn⁴⁺, Mo⁴⁺, Ru⁴⁺, Nb⁴⁺, Sb⁵⁺, Nb⁵⁺, Mo⁶⁺, and Te⁶⁺; a valence of M is m, wherein m is specifically univalence, bivalence, trivalence, tetravalence, pentavalence or sexavalence; a, b, c, d, e and δ are respectively molar percentages occupied by corresponding elements; and relationships between a, b, c, d, e, δ, and m meet (0.68+a)+2(b+c)+md+4e=2(2+δ), and also meet b+c+d+e=1, wherein -0.08≤a≤0.08; 0<b≤0.38; 0<c≤0.38; 0≤d<0.36; 0<e≤0.7; and -0.02<δ<0.02.

2. The layered copper-containing oxide material according to claim 1, wherein the layered copper-containing oxide material is applied to a positive electrode active material of sodium-ion secondary battery.

3. A preparation process of the layered copper-containing oxide material according to claim 1, wherein the process is a solid phase method, comprising:
mixing sodium carbonate whose chemical dosage is 102wt% to 108wt% of that of required sodium with required chemical dosages of nickel oxide, copper oxide, manganese dioxide and an oxide of M in proportion, to obtain a precursor by means of the mixing, wherein M is specifically one or more of Mg²⁺, Mn²⁺, Zn²⁺, Co²⁺, Al³⁺, B³⁺, Cr³⁺, Mn³⁺, Co³⁺, V³⁺, Zr⁴⁺, Ti⁴⁺, Sn⁴⁺, Mo⁴⁺, Ru⁴⁺, Nb⁴⁺, Sb⁵⁺, Nb⁵⁺, Mo⁶⁺, and Te⁶⁺;
evenly mixing the precursor by using a ball-milling method to obtain precursor powders;
placing the precursor powders into a muffle furnace, and performing heat treatment thereon for 10 h to 24 h in an air atmosphere at 750°C to 1,000°C; and
grinding the precursor powders after the heat treatment, to obtain the layered copper-containing oxide material.

4. A preparation process of the layered copper-containing oxide material according to claim 1, wherein the process is a spray drying method, comprising:
mixing sodium carbonate whose chemical dosage is 102wt% to 108wt% of that of required sodium with required chemical dosages of nickel oxide, copper oxide, manganese dioxide and an oxide of M in proportion, to obtain a precursor by means of the mixing, wherein M is specifcally one or more of Mg²⁺, Mn²⁺, Zn²⁺, Co²⁺, Al³⁺, B³⁺, Cr³⁺, Mn³⁺, Co³⁺, V³⁺, Zr⁴⁺, Ti⁴⁺, Sn⁴⁺, Mo⁴⁺, Ru⁴⁺, Nb⁴⁺, Sb⁵⁺, Nb⁵⁺, Mo⁶⁺ and Te⁶⁺;
adding ethanol or water into the precursor to form a slurry and evenly stirring;
performing spray drying on the slurry to obtain precursor powders;
placing the precursor powders into a muffle furnace, and performing heat treatment thereon for 10 h to 24 h in an air atmosphere at 750°C to 1,000°C; and
grinding the precursor powders after the heat treatment, to obtain the layered copper-containing oxide material.

5. A preparation process of the layered copper-containing oxide material according to claim 1, wherein the process is a sol-gel method, comprising:
dissolving sodium acetate whose chemical dosage is 102wt% to 108wt% of that of required sodium, and required chemical dosages of a nitrate of a transition metal and a nitrate containing an element M, in a certain volume of deionized water, magnetically stirring at 80°C, gradually adding citric acid thereinto, and drying by evaporation to form a precursor gel, wherein M is specifically one or more of Mg²⁺, Mn²⁺, Zn²⁺, Co²⁺, Al³⁺, B³⁺, Cr³⁺, Mn³⁺, Co³⁺, V³⁺, Zr⁴⁺, Ti⁴⁺, Sn⁴⁺, Mo⁴⁺, Ru⁴⁺, Nb⁴⁺, Sb⁵⁺, Nb⁵⁺, Mo⁶⁺ and Te⁶⁺;
placing the precursor gel into a crucible, and pre-sintering for 2 h in an air atmosphere at 250°C to 500°C;
further performing heat treatment for 5 h to 24 h at 750°C to 1,000°C; and
grinding the precursor powders after the heat treatment, to obtain the layered copper-containing oxide material.

6. The process according to claim 5, wherein the transition metal comprises Ni, Cu and Mn.

7. Use of a layered copper-containing oxide material prepared by using the process according to any one of claims 3 to 6, wherein the layered copper-containing oxide material is applied to a large-scale energy storage device of a solar power station, a wind power station or a peak load regulation and distribution power station, or a back-up power source of a communication base station.

8. A cathode of a sodium-ion secondary battery, wherein the cathode comprises:
a current collector, a conductive additive and a binder that are coated on the current collector, and the layered copper-containing oxide material according to claim 1.

9. A sodium-ion secondary battery comprising the cathode according to claim 8.

10. Use of the sodium-ion secondary battery according to claim 9, wherein the sodium-ion secondary battery is applied to a large-scale energy storage device of a solar power station, a wind power station or a peak load regulation and distribution power station, or a back-up power source of a communication base station.

## Patentansprüche

1. Geschichtetes kupferhaltiges Oxidmaterial, wobei das geschichtete kupferhaltige Oxidmaterial eine allgemeine chemische Formel Na_{0,68+a}Ni_{b}Cu_{c}M_{d}MnₑO_{2+δ}, aufweist,
wobei Ni, Cu und Mn Übergangsmetallelemente sind und M ein Element ist, das Dotierung und Substitution bei der Übergangsmetallkomplexierung ausübt; wobei Ni, Cu, Mn und M jeweils oktaedrische Strukturen bilden, zusammen mit sechs Sauerstoffatomen, die dazu am nächsten benachbart sind, ,und die multiplen oktaedrische Strukturen Anordnungen mit gemeinsamen Kanten aufweisen und Übergangsmetallschichten bilden; wobei Alkalimetallionen Na⁺ zwischen jeweils zwei der Übergangsmetallschichten angeordnet sind; wobei M spezifisch eines oder mehrere von Mg²⁺, Mn²⁺, Zn²⁺, Co²⁺, Al³⁺, B³⁺, Cr³⁺, Mn³⁺, Co³⁺, V³⁺, Zr⁴⁺, Ti⁴⁺, Sn⁴⁺, Mo⁴⁺, Ru⁴⁺, Nb⁴⁺, Sb⁵⁺, Nb⁵⁺, Mo⁶⁺ und Te⁶⁺ ist; wobei eine Wertigkeit von M m ist, wobei m spezifisch einwertig, zweiwertig, dreiwertig, vierwertig, fünfwertig oder sechswertig ist; wobei a, b, c, d, e und δ jeweils molare Prozentsätze sind, die durch entsprechende Elemente besetzt sind; und die Beziehungen zwischen a, b, c, d, e, δ und m (0,68+a)+2(b+c)+md+4e=2(2+δ) entsprechen und auch b+c+d+e=l entsprechen, wobei -0,08≤a≤0,08; 0<b≤0,38; 0<c≤0,38; 0≤d<0,36; 0<e≤0,7; und -0,02<δ<0,02.

2. Geschichtetes kupferhaltiges Oxidmaterial nach Anspruch 1, wobei das geschichtete kupferhaltige Oxidmaterial auf ein positives aktives Elektrodenmaterial einer Natriumionensekundärbatterie aufgebracht ist.

3. Herstellungsverfahren für das geschichtete kupferhaltige Oxidmaterial nach Anspruch 1, wobei das Verfahren ein Festphasenverfahren ist, umfassend:
Mischen von Natriumcarbonat, dessen chemische Dosierung 102 Gew.-% bis 108 Gew.-% derjenigen des erforderlichen Natriums ist, mit den erforderlichen chemischen Dosierungen von Nickeloxid, Kupferoxid, Mangandioxid und einem Oxid von M im Verhältnis, um ein Vorprodukt durch das Mischen zu erhalten, wobei M spezifisch eines oder mehrere von Mg²⁺, Mn²⁺, Zn²⁺, Co²⁺, Al³⁺, B³⁺, Cr³⁺, Mn³⁺, Co³⁺, V³⁺, Zr⁴⁺, Ti⁴⁺, Sn⁴⁺, Mo⁴⁺, Ru⁴⁺, Nb⁴⁺, Sb⁵⁺, Nb⁵⁺, Mo⁶⁺ und Te⁶⁺ ist;
gleichmäßiges Mischen des Vorprodukts durch Verwenden eines Kugelmahlverfahrens, um Vorproduktpulver zu erhalten;
Positionieren der Vorproduktpulver in einen Muffelofen und Ausführen einer Hitzebehandlung für 10 h bis 24 h in einer Luftatmosphäre bei 750 °C bis 1000 °C; und
Mahlen der Vorproduktpulver nach der Hitzebehandlung, um das geschichtete kupferhaltige Oxidmaterial zu erhalten.

4. Herstellungsverfahren für das geschichtete kupferhaltige Oxidmaterial nach Anspruch 1, wobei das Verfahren ein Sprühtrocknungsverfahren ist, das Folgendes umfasst:
Mischen von Natriumcarbonat, dessen chemische Dosierung 102 Gew.-% bis 108 Gew.-% derjenigen des erforderlichen Natriums ist, mit den erforderlichen chemischen Dosierungen von Nickeloxid, Kupferoxid, Mangandioxid und einem Oxid von M im Verhältnis, um ein Vorprodukt durch das Mischen zu erhalten, wobei M spezifisch eines oder mehrere von Mg²⁺, Mn²⁺, Zn²⁺, Co²⁺, Al³⁺, B³⁺, Cr³⁺, Mn³⁺, Co³⁺, V³⁺, Zr⁴⁺, Ti⁴⁺, Sn⁴⁺, Mo⁴⁺, Ru⁴⁺, Nb⁴⁺, Sb⁵⁺, Nb⁵⁺, Mo⁶⁺ und Te⁶⁺ ist;
Zusetzen von Ethanol oder Wasser zu dem Vorprodukt, um eine Suspension zu bilden, und gleichmäßiges Rühren;
Durchführen von Sprühtrocknen mit der Suspension, um Vorproduktpulver zu erhalten; Positionieren der Vorproduktpulver in einen Muffelofen und Ausführen einer Hitzebehandlung für 10 h bis 24 h in einer Luftatmosphäre bei 750 °C bis 1000 °C; und
Mahlen der Vorproduktpulver nach der Hitzebehandlung, um das geschichtete kupferhaltige Oxidmaterial zu erhalten.

5. Herstellungsverfahren für das geschichtete kupferhaltige Oxidmaterial nach Anspruch 1, wobei das Verfahren ein Sol-Gel-Verfahren ist, das Folgendes umfasst:
Lösen von Natriumacetat, dessen chemische Dosierung 102 Gew.-% bis 108 Gew.-% derjenigen des erforderlichen Natriums ist, und erforderliche chemische Dosierungen eines Nitrats eines Übergangsmetalls und eines Nitrats, das ein Element M enthält, in einem bestimmten Volumen von entionisiertem Wasser, magnetisches Rühren bei 80 °C, allmähliches Zugeben von Zitronensäure dazu und Trocknen durch verdampfen, um ein Vorproduktgel zu bilden, wobei M spezifisch eines oder mehrere von Mg²⁺, Mn²⁺, Zn²⁺, Co²⁺, Al³⁺, B³⁺, Cr³⁺, Mn³⁺, Co³⁺, V³⁺, Zr⁴⁺, Ti⁴⁺, Sn⁴⁺, Mo⁴⁺, Ru⁴⁺, Nb⁴⁺, Sb⁵⁺, Nb⁵⁺, Mo⁶⁺ und Te⁶⁺ ist;
Positionieren des Vorproduktgels in einen Schmelztiegel und Vorsintern für 2 h in einer Luftatmosphäre bei 250 °C bis 500 °C;
ferner Ausführen einer Hitzebehandlung für 5 h bis 24 h bei 750 °C bis 1000 °C; und
Mahlen der Vorproduktpulver nach der Hitzebehandlung, um das geschichtete kupferhaltige Oxidmaterial zu erhalten.

6. Verfahren nach Anspruch 5, wobei das Übergangsmetall Ni, Cu und Mn umfasst.

7. Verwendung eines geschichteten kupferhaltigen Oxidmaterials, das durch Verwenden des Verfahrens nach irgendeinem der Ansprüche 3 bis 6 hergestellt ist, wobei das geschichtete kupferhaltige Oxidmaterial bei einer großtechnischen Energiespeichervorrichtung eines Solarkraftwerks, einer Windenergieanlage oder eines Spitzenlastregulier- und Verteilungskraftwerks oder einer Notstromversorgung einer Kommunikationsbasisstation angewendet wird.

8. Kathode einer Natriumionensekundärbatterie, wobei die Kathode umfasst:
einen Stromabnehmer, ein leitfähiges Additiv und ein Bindemittel, die auf den Stromabnehmer aufgebracht sind, und das geschichtete kupferhaltige Oxidmaterial nach Anspruch 1.

9. Natriumionensekundärbatterie umfassend die Kathode nach Anspruch 8.

10. Verwendung der Natriumionensekundärbatterie nach Anspruch 9, wobei die Natriumionensekundärbatterie bei einer großtechnischen Energiespeichervorrichtung eines Solarkraftwerks, einer Windenergieanlage oder eines Spitzenlastregulier- und Verteilungskraftwerks oder einer Notstromversorgung einer Kommunikationsbasisstation angewendet wird.

## Revendications

1. Matériau d'oxyde stratifié contenant du cuivre, dans lequel le matériau d'oxyde stratifié contenant du cuivre possède une formule chimique générale de Na_{0,68+a}Ni_{b}Cu_{c}M_{d}MnₑO_{2+δ},
dans laquelle Ni, Cu et Mn sont des éléments de métal de transition, et M est un élément qui réalise le dopage et la substitution sur complexation des métaux de transition ; Ni, Cu et M forment respectivement des structures octaédriques ensemble avec six atomes d'oxygène avec lesquels ils sont le plus adjacent, et les structures octaédriques multiples présentent des agencements avec des bords communs et constituent des couches des métaux de transition ; les ions de métal alcalin Na⁺ sont situés entre deux couches des métaux de transition ; M est spécifiquement au moins un parmi Mg²⁺, Mn²⁺, Zn²⁺, Co²⁺, Al³⁺, B³⁺, Cr³⁺, Mn³⁺, Co³⁺, V³⁺, Zr⁴⁺, Ti⁴⁺, Sn⁴⁺, Mo⁴⁺, Ru⁴⁺, Nb⁴⁺, Sb⁵⁺, Nb⁵⁺, Mo⁶⁺, et Te⁶⁺; une valence de M est m, dans lequel m est spécifiquement univalent, bivalent, trivalent, tétravalent, pentavalent ou hexavalent; a, b, c, d, e et δ représentent respectivement des pourcentages molaires occupés par les éléments correspondants ; et les relations entre a, b, c, d, e, δ et m répondent à (0,68+a)+2(b+c)+md+4e = 2(2+δ), et répondent également à b+c+d+e = 1, dans lequel -0,08 ≤ a ≤ 0,08 ; 0 < b ≤ 0,38 ; 0 < c ≤ 0,38 ; 0 ≤ d < 0,36 ; 0 < e ≤ 0,7 ; et -0,02 < δ < 0,02.

2. Matériau d'oxyde stratifié contenant du cuivre selon la revendication 1, dans lequel le matériau d'oxyde stratifié contenant du cuivre est appliqué à un matériau actif d'électrode positive d'une batterie secondaire à l'ion sodium.

3. Processus de création du matériau d'oxyde stratifié contenant du cuivre selon la revendication 1, dans lequel le processus est un procédé en phase solide, comprenant :
le mélange de carbonate de sodium dont le dosage chimique est compris entre 102 % en poids et 108 % en poids de sodium requis avec des dosages chimiques requis d'oxyde de nickel, d'oxyde de cuivre, de dioxyde de manganèse et d'un oxyde de M en proportion, afin d'obtenir un précurseur au moyen du mélange, dans lequel M est spécifiquement au moins un parmi Mg²⁺, Mn²⁺, Zn²⁺, Co²⁺, Al³⁺, B³⁺, Cr³⁺, Mn³⁺, Co³⁺, V³⁺, Zr⁴⁺, Ti⁴⁺, Sn⁴⁺, Mo⁴⁺, Ru⁴⁺, Nb⁴⁺, Sb⁵⁺, Nb⁵⁺, Mo⁶⁺, et Te⁶⁺ ;
le mélange homogène du précurseur en utilisant un procédé de broyage à billes afin d'obtenir des poudres de précurseur ;
le positionnement des poudres de précurseur dans un four à moufle, et la réalisation d'un traitement thermique sur celles-ci pendant 10 heures à 24 heures sous une atmosphère d'air à une température comprise entre 750 °C et 1000 °C ; et
le broyage des poudres de précurseur après le traitement thermique afin d'obtenir le matériau d'oxyde stratifié contenant du cuivre.

4. Processus de création du matériau d'oxyde stratifié contenant du cuivre selon la revendication 1, dans lequel le processus est un procédé de séchage par atomisation, comprenant :
le mélange de carbonate de sodium dont le dosage chimique est compris entre 102 % en poids et 108 % en poids de sodium requis avec des dosages chimiques requis d'oxyde de nickel, d'oxyde de cuivre, de dioxyde de manganèse et d'un oxyde de M en proportion, afin d'obtenir un précurseur au moyen du mélange, dans lequel M est spécifiquement au moins un parmi Mg²⁺, Mn²⁺, Zn²⁺, Co²⁺, Al³⁺, B³⁺, Cr³⁺, Mn³⁺, Co³⁺, V³⁺, Zr⁴⁺, Ti⁴⁺, Sn⁴⁺, Mo⁴⁺, Ru⁴⁺, Nb⁴⁺, Sb⁵⁺, Nb⁵⁺, Mo⁶⁺, et Te⁶⁺ ;
l'ajout d'éthanol ou d'eau au précurseur afin de former un coulis et une agitation de manière continue ;
la réalisation d'un séchage par atomisation sur le coulis afin d'obtenir des poudres de précurseur ; le positionnement des poudres de précurseur dans un four à moufle, et la réalisation d'un traitement thermique sur celles-ci pendant 10 heures à 24 heures sous une atmosphère d'air à une température comprise entre 750 °C et 1000 °C ; et
le broyage des poudres de précurseur après le traitement thermique afin d'obtenir le matériau d'oxyde stratifié contenant du cuivre.

5. Processus de création du matériau d'oxyde stratifié contenant du cuivre selon la revendication 1, dans lequel le processus est un procédé sol-gel, comprenant :
la dissolution d'acétate de sodium dont le dosage chimique est compris entre 102 % en poids et 108 % en poids de sodium requis et des dosages chimiques requis d'un nitrate d'un métal de transition et d'un nitrate contenant un élément M, dans un certain volume d'eau désionisée, l'agitation magnétique à 80 °C, l'ajout graduel d'acide citrique à celui-ci, et le séchage par évaporation afin de former un gel de précurseur, dans lequel M est spécifiquement au moins un parmi Mg²⁺, Mn²⁺, Zn²⁺, Co²⁺, Al³⁺, B³⁺, Cr³⁺, Mn³⁺, Co³⁺, V³⁺, Zr⁴⁺, Ti⁴⁺, Sn⁴⁺, Mo⁴⁺, Ru⁴⁺, Nb⁴⁺, Sb⁵⁺, Nb⁵⁺, Mo⁶⁺, et Te⁶⁺ ;
le positionnement du gel de précurseur dans un creuset, et le pré-frittage pendant 2 heures sous une atmosphère d'air à une température comprise entre 250 °C et 500 °C ;
la réalisation en outre d'un traitement thermique pendant 5 heures à 24 heures à une température comprise entre 750 °C et 1000 °C ; et
le broyage des poudres de précurseur après le traitement thermique afin d'obtenir le matériau d'oxyde stratifié contenant du cuivre.

6. Processus selon la revendication 5, dans lequel le métal de transition comprend du Ni, du Cu et du Mn.

7. Utilisation d'un matériau d'oxyde stratifié contenant du cuivre préparé par l'utilisation du processus selon l'une quelconque des revendications 3 à 6, dans laquelle le matériau d'oxyde stratifié contenant du cuivre est appliqué à un dispositif de stockage d'énergie à grande échelle d'une centrale solaire, d'une centrale éolienne ou d'une centrale de régulation et de distribution de la charge de pointe, ou à une source d'alimentation électrique de secours d'une station de base de communication.

8. Cathode d'une batterie secondaire à l'ion sodium, dans laquelle la cathode comprend :
un collecteur de courant, un additif conducteur et un liant qui sont revêtus sur le collecteur de courant, et le matériau d'oxyde stratifié contenant du cuivre selon la revendication 1.

9. Batterie secondaire à l'ion sodium comprenant la cathode selon la revendication 8.

10. Utilisation de la batterie secondaire à l'ion sodium selon la revendication 9, dans laquelle la batterie secondaire à l'ion sodium est appliquée à un dispositif de stockage d'énergie à grande échelle d'une centrale solaire, d'une centrale éolienne ou d'une centrale de régulation et de distribution de la charge de pointe, ou à une source d'alimentation électrique de secours d'une station de base de communication.
